# EUROPEAN PATENT SPECIFICATION

(11) **EP 3 595 219 B1**
(45) Date of publication and mention of the grant of the patent: **13.01.2021**
(21) Application number: 18771616.2
(22) Date of filing: 23.03.2018
(51) Int. Cl.: H04L 1/18, H04L 1/16, H04L 1/00

(54) **METHOD OF MULTI-LINK RETRANSMISSION UNDER MULTIPLE CONNECTIONS, BASE STATION AND STORAGE MEDIUM**
VERFAHREN ZUR MEHRVERBINDUNGSNEUÜBERTRAGUNG UNTER MEHREREN VERBINDUNGEN, BASISSTATION UND SPEICHERMEDIUM
PROCÉDÉ DE RETRANSMISSION À LIAISONS MULTIPLES DANS DE MULTIPLES CONNEXIONS, STATION DE BASE ET SUPPORT DE STOCKAGE

(30) Priority: 24.03.2017 CN 201710184917
(43) Date of publication of application: 15.01.2020
(73) Proprietor: China Mobile Communication Co., Ltd Research Institute, Beijing 100053 (CN); China Mobile Communications Group Co., Ltd, Beijing 100032 (CN)
(72) Inventor: LI, Gang, Beijing 100053 (CN); LIU, Liang, Beijing 100053 (CN); CHEN, Yami, Beijing 100053 (CN); JIN,Ba, Beijing 100053 (CN); SUN, Junshuai, Beijing 100053 (CN)
(74) Representative: J A Kemp LLP
(86) International application number: PCT/CN2018/080365
(87) International publication number: WO 2018/171775

(56) References cited:
- EP-A1- 3 104 641
- EP-A1- 3 598 797
- CN-A- 102 377 547
- CN-A- 103 326 831
- CN-A- 104 205 706

## Description

### CROSS-REFERENCE TO RELATED APPLICATIONS

The present invention is filed based upon and claims priority to Chinese Patent Application No. 201710184917.5, filed on March 24, 2017.

### TECHNICAL FIELD

The invention relates to a retransmission technology, and more particularly to a method and a base station for implementing multilink retransmission in the case of multiple connections, and a storage medium.

### BACKGROUND

How to design a flexible and robust access network architecture is the key of a mobile communication system. In a 3rd-Generation (3G) system, logical nodes of an access network include a Node B (NB) and a Radio Network Controller (RNC). A 4th-Generation (4G) logical architecture is designed to be more flat, and only includes an Evolved Node B (eNB). Considering a requirement on a 5th-Generation (5G) access network architecture, the most typical requirement unlike that on a 4G access network is that the access network supports a logical function division of the access network into a Remote Unit (RU) and a Central Unit (CU), and supports migration of a protocol stack function between the CU and a Distributed Unit (DU). Compared with a flat 4G architecture, a CU-DU two-stage access network architecture has the advantages that: an inter-cell cooperation gain may be obtained, and centralized load management may be implemented; a centralized control in the case of dense networking, for example, multiple connections and high-density switching, may be efficiently implemented; and a pooling gain may be obtained, a Network Function Virtualization (NFV)/Software-Defined Networking (SDN) may be enabled, and deployment requirements of an operator on some 5G scenarios are met.

In a CU-DU two-stage architecture, two network elements (a CU and a DU) are located on a base station side. The CU is a central node capable of controlling and coordinating multiple cells, including protocol stack high-layer control and data functions, and possibly part of baseband processing functions. The DU is a distributed unit that realizes a Remote Radio Head (RRH) function and other baseband processing functions. The CU is connected with the DU through a fronthaul interface. There is only a Packet Data Convergence Protocol (PDCP) stack on the CU and a PDCP layer has no retransmission function. Therefore, in a scenario where retransmission is required, if a terminal fails to transmit on a link when the terminal accesses multiple DUs, how to implement fast retransmission on another link is a problem that is required to be solved in the CU-DU access network architecture.

EP 3 598 797A1 discloses a data transmission method and apparatus related to a selection of the path in a system having distributed units when one of two links towards a terminal fails.

EP3101641 A1 discloses a handshake between two base stations in case where a link of one of them towards a user equipment fails, and where a second one takes over the retransmission.

### SUMMARY

In view of this, embodiments of the invention are intended to provide a method and a base station for implementing multilink retransmission in the case of multiple connections and a storage medium, which at least solve the problem in the related art.

The technical solutions in the embodiments of the invention are implemented as follows. The present invention is defined in the independent claims.

The invention provides a method for implementing multilink retransmission in the case of multiple connections, as in claim 1.

The invention provides a base station, which includes a processor and a memory configured to store a computer program capable of running in the processor as in claim 13.

The invention provides a storage medium, in which a computer program is stored, the computer program being executed by a processor to implement the method in any of the abovementioned solution, as in claim 14.

### BRIEF DESCRIPTION OF DRAWINGS

FIG. 1 is a flowchart of implementing a method according to an invention.
FIG. 2 is a schematic diagram of a CU-DU architecture according to an invention.
FIG. 3 is a flowchart of implementing an application scenario according to an embodiment of the invention.
FIG. 4 is a flowchart of implementing an application scenario according to an embodiment of the invention.
FIG. 5 is a flowchart of implementing an application scenario according to an embodiment of the invention.
FIG. 6 is a flowchart of implementing an application scenario according to an embodiment of the invention.
FIG. 7 is a flowchart of implementing an application scenario according to an embodiment of the invention.
FIG. 8 is a flowchart of implementing an application scenario according to an invention.
FIG. 9 is a flowchart of implementing an application scenario according to an invention.

### DETAILED DESCRIPTION

Implementations of the technical solution will be further described in detail below with reference to the accompanying drawings.

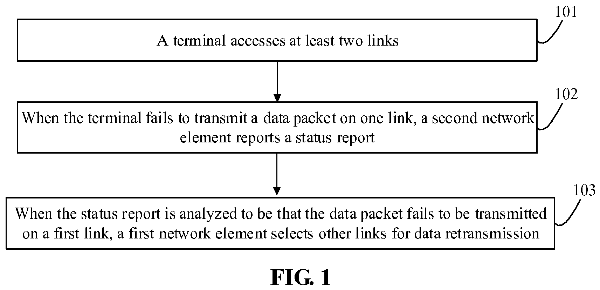

The invention provides a method for implementing multilink retransmission in the case of multiple connections. As shown in FIG. 1, the method includes the following steps.

At 101, a terminal accesses at least two links.

At 102, when the terminal fails to transmit a data packet on one link, a second network element reports a status report.

At 103, when the status report is analyzed to be that the data packet fails to be transmitted on a first link, a first network element selects other links for data retransmission.

During a practical application, when the terminal accesses at least two links, the first network element allocates multiple data packets obtained by splitting to the at least two links. Then, when the terminal fails to transmit the data packet on one link, the first network element receives the status report reported by the second network element through interaction between the first network element and the second network element. When the status report is analyzed by the first network element to be that the data packet fails to be transmitted on the first link, the first network element selects the other link for data retransmission, thereby implementing data packet retransmission in the case of multiple connections for the terminal.

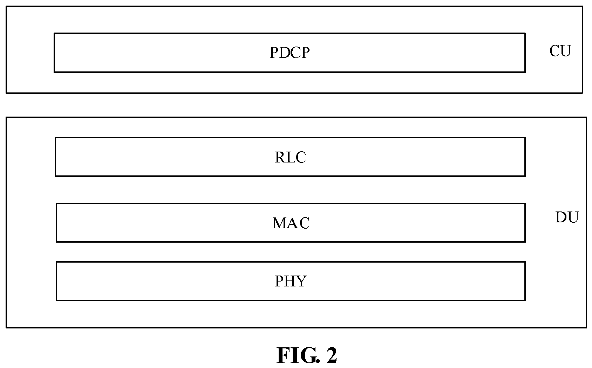

During the practical application, for example, the first network element is a CU on a base station side, and the second network element is a DU on the base station side. A CU-DU architecture is shown in FIG. 2. The CU splits the data packets according to multiple links accessed by the terminal, and in such case, the data packet refers to an Internet Protocol (IP) data packet or a compressed IP data packet. Unlike a subsequent fragmented data packet (or called a sharded data packet), called a "small packet", obtained by fragmentation processing in the DU, the IP data packet or the compressed IP data packet may be called a "large packet". All "small packets" and "large packets" mentioned herein are defined like this, just for simplifying the description. The DU performs fragmentation processing on the data packet to obtain fragmented data packets and then provides them to the corresponding links in the multiple links for transmission. If retransmission is required in such a multi-connection scenario, namely the terminal fails to transmit on one of the multiple links, signaling interaction between the CU and the DU is performed based on the architecture shown in FIG. 2 according to a preset strategy, and fast retransmission of the data packet that fails to be transmitted is implemented on the other link in the multiple links of the terminal, thereby implementing data packet retransmission in the case of multiple connections for the terminal. The invention is applied to a retransmission processing in a CU-DU access network architecture where the first network element is a CU and the second network element is a DU, and is not limited to a scenario of the CU-DU architecture.

As shown in FIG. 2, the CU is a central node capable of controlling and coordinating multiple cells, including protocol stack high-layer control and data functions, and possibly part of baseband processing functions. A unit in the CU is PDCP, and PDCP is configured for processing such as compression, encryption, reassembling and splitting. The DU is a distributed unit that realizes an RRH function and other baseband processing functions. Units in the DU include: 1) Radio Link Control (RLC), RLC being configured for fragmentation, retransmission and the like; 2) Media Access Control (MAC), MAC being configured for scheduling, concatenation, multiplexing, retransmission and the like; and 3) Physical (PHY), PHY being configured for modulation, coding and the like. The CU is connected with the DU through a fronthaul interface.

There are multiple segmentation solutions for function division of CU-DU. Different segmentation solutions correspond to different application scenarios and performance gains, and also have greatly different requirements on parameters such as a bandwidth of the fronthaul interface, a transmission delay and synchronization. PDCP-RLC is a high-layer segmentation solution. The PDCP-RLC segmentation solution is most feasible for the CU-DU architecture in a future 3rd Generation Partnership Project (3GPP). Considering that there is only a PDCP stack on the CU and a PDCP layer has no retransmission function, if a terminal fails to transmit on a link when the terminal accesses multiple DUs, fast retransmission is required to be implemented on the other links. With the invention, fast retransmission in a multi-connection scenario is implemented through specific implementation of interaction between CU-DU in each subsequent example.

Based on the abovementioned example of the invention, fast retransmission of the data packet in the case of multiple connections for the terminal is implemented through interaction between a first network element and a second network element. The invention is applied to a retransmission processing in a CU-DU access network architecture where a first network element is a CU and a second network element is a DU, and is not limited to a scenario of the CU-DU architecture.

In the invention, the case of multi-transmission and multi-reception in a multi-connection scenario is described, namely the terminal simultaneously accesses at least two links at present and performs concurrent processing on the at least two links without link switching. The first network element, for example, the CU, triggers retransmission, and the first network element, for example, the CU, executes retransmission. Specifically, when the first network element receives a status report reported by the terminal, the first network element triggers retransmission. When the status report is analyzed to be that a data packet fails to be transmitted on a first link, the first network element selects, from the at least two links, i links of which link transmission quality is higher than that of the first link and retransmits the data packet transmitted on the first link on the i links, i being a positive integer more than or equal to 1.

In an implementation of the invention, there are two reporting manners for the status report, including: 1) active reporting, namely the terminal periodically reports the status report; and 2) passive reporting, namely the terminal reports the status report after receiving a query request from the first network element. During a practical application, a PDCP status report is reported based on a network configuration, for example, reported by the terminal responsive to active query from an base station (passive reporting) or periodically reported by the terminal (active reporting).

### First Embodiment

Based on the abovementioned examples, in the embodiment of the invention, fast retransmission of the data packet in the case of multiple connections for the terminal is implemented through interaction between a first network element and a second network element. The embodiment of the invention is applied to a retransmission processing in a CU-DU access network architecture where a first network element is a CU and a second network element is a DU, and is not limited to a scenario of the CU-DU architecture.

In the embodiment of the invention, the case of multi-transmission and multi-reception in a multi-connection scenario is described, namely the terminal simultaneously accesses at least two links at present and performs concurrent processing on the at least two links without link switching. The second network element, for example, the DU, triggers the retransmission, and the first network element, for example, the CU, executes the retransmission. Specifically, when the second network element finds that a data packet fails to be transmitted on a first link and/or the first link is abnormal, the second network element triggers the retransmission. The second network element reports a status report. When the status report is analyzed by the first network element to be that the data packet fails to be transmitted on the first link, the first network element selects, from the at least two links, i links of which link transmission quality is higher than that of the first link and retransmits the data packet transmitted on the first link on the i links, i being a positive integer more than or equal to 1.

### Second Embodiment

Based on the abovementioned embodiment, in the embodiment of the invention, fast retransmission of the data packet in the case of multiple connections for the terminal is implemented through interaction between a first network element and a second network element. The embodiment of the invention is applied to a retransmission processing in a CU-DU access network architecture where a first network element is a CU and a second network element is a DU, and is not limited to a scenario of the CU-DU architecture.

In the embodiment of the invention, the case of multi-transmission and multi-reception in a multi-connection scenario is described, namely the terminal simultaneously accesses at least two links at present and performs concurrent processing on the at least two links without link switching. The second network element, for example, the DU, triggers the retransmission, and the first network element, for example, the CU, executes the retransmission. Specifically, when the second network element finds that a data packet fails to be transmitted on a first link and/or the first link is abnormal, the second network element triggers the retransmission. The second network element reports a status report. When the status report is analyzed by the first network element to be that the data packet fails to be transmitted on the first link, the first network element initiates a query request to the terminal to confirm a transmission status. The first network element receives a query response fed back by the terminal, analyzes from the query response that the transmission status is that the data packet fails to be transmitted on the first link, selects, from the at least two links, i links of which link transmission quality is higher than that the first link, and retransmits the data packet transmitted on the first link on the i links, i being a positive integer more than or equal to 1.

Unlike the first embodiment, the first network element is required to confirm the transmission status from the terminal. During a practical application, considering that the terminal may have received a packet with PDCP SN=n2 from the CU, but an Acknowledgement (ACK) may fail to be transmitted on a radio link, the CU may initiate a request of querying a PDCP transmission status to the terminal to determine a PDCP data packet that needs to be retransmitted. SN denotes a sequence number and will not be elaborated.

### Third Embodiment

Based on the abovementioned embodiments, in the embodiment of the invention, fast retransmission of the data packet in the case of multiple connections for the terminal is implemented through interaction between a first network element and a second network element. The embodiment of the invention is applied to a retransmission processing in a CU-DU access network architecture where a first network element is a CU and a second network element is a DU, and is not limited to a scenario of the CU-DU architecture.

In the embodiment of the invention, the case of multi-transmission and multi-reception in a multi-connection scenario is described, namely the terminal simultaneously accesses at least two links at present and performs concurrent processing on the at least two links without link switching. The first network element, for example, the CU, triggers the retransmission, and the first network element, for example, the CU, executes the retransmission. In the abovementioned embodiments, complete retransmission is involved, namely the data packet, or called a "large packet", is transmitted. Unlike the abovementioned embodiments, in the embodiment of the invention, partial retransmission is involved, and a fragmented data packet, or called a "small packet", is transmitted, namely only the "small packet" that fails to be transmitted is transmitted, complete retransmission is not required, and fragmented data packets are required to be re-assembled after successful transmission. Specifically, when the first network element receives a status report reported by the terminal, the first network element triggers the retransmission. When the status report is analyzed to be that a data packet fails to be transmitted on a first link, the first network element initiates a query request to the second network element to confirm a transmission status. The first network element receives a query response fed back by the second network element and analyzes from the query response that the transmission status is that an xth fragmented data packet in the data packet fails to be transmitted on the first link, x being a positive integer more than or equal to 1. The first network element selects i links of which link transmission quality is higher than that of the first link from the at least two links, forwards an identifier of the first link obtained from the query response to the i links, and retransmits the xth fragmented data packet transmitted on the first link on the i links according to the identifier of the first link, such that the fragmented data packets are re-assembled at the terminal, i being a positive integer more than or equal to 1.

In an implementation of the embodiment of the invention, the second network element (for example, the DU) sends the status report to the first network element (for example, the CU), the status report including a starting position of the data packet that fails to be transmitted and the like. Therefore, not only information about the fragmented data packets of the first network element is backed up to the second network element, but also the identifier of the link on which the data packet fails to be transmitted is contained, so as to facilitate the first network element to perform subsequent retransmission processing on a better link. During a practical application, a unit "link 1-RLC" in the second network element (for example, the DU) may also return a transmission status report of a PDCP Protocol Data Unit (PDU) (including an initial status of an RLC PDU that fails to be transmitted), and a unit "PDCP" in the first network element (for example, the CU), after receiving the transmission report, generates the RLC PDU containing an identifier of the link 1, and selects a better link 2 for transmission.

### Fourth Embodiment

Based on the abovementioned embodiments, in the embodiment of the invention, fast retransmission of the data packet in the case of multiple connections for the terminal is implemented through interaction between a first network element and a second network element. The embodiment of the invention is applied to a retransmission processing in a CU-DU access network architecture where a first network element is a CU and a second network element is a DU, and is not limited to a scenario of the CU-DU architecture.

In the embodiment of the invention, the case of multi-transmission and multi-reception in a multi-connection scenario is described, namely the terminal simultaneously accesses at least two links at present and performs concurrent processing on the at least two links without link switching. The second network element, for example, the DU, triggers the retransmission, and the first network element, for example, the CU, executes the retransmission. In the abovementioned embodiments, complete retransmission is involved, namely the data packet, or called a "large packet", is transmitted. Unlike the abovementioned embodiments, in the embodiment of the invention, partial retransmission is involved, and a fragmented data packet, or called a "small packet", is transmitted, namely only the "small packet" that fails to be transmitted is retransmitted, complete retransmission is not required, and fragmented data packets are required to be re-assembled after successful transmission. Specifically, when the second network element finds that a data packet fails to be transmitted on a first link and/or the first link is abnormal, the second network element triggers the retransmission. The second network element reports a status report. When the status report is analyzed to be that an xth fragmented data packet in the data packet fails to be transmitted on the first link, the first network element selects, from the at least two links, i links of which link transmission quality is higher than that of the first link, x being a positive integer more than or equal to 1. The first network element forwards an identifier of the first link obtained from the status report to the i links and retransmits the xth fragmented data packet transmitted on the first link on the i links according to the identifier of the first link, such that the fragmented data packets are re-assembled at the terminal, i being a positive integer more than or equal to 1.

In an implementation of the embodiment of the invention, the second network element (for example, the DU) sends the status report to the first network element (for example, the CU), the status report including a starting position of the data packet that fails to be transmitted and the like. Therefore, not only information about the fragmented data packets of the first network element is backed up to the second network element, but also the identifier of the link on which the data packet fails to be transmitted is contained, so as to facilitate the second network element to perform subsequent retransmission processing on a better link. During a practical application, a unit "link 1-RLC" in the second network element (for example, the DU) may also return a transmission status report of a PDCP Protocol Data Unit (PDU) (including an initial status of an RLC PDU that fails to be transmitted), and a unit "PDCP" in the first network element (for example, the CU), after receiving the transmission report, generates the RLC PDU containing an identifier of the link 1 and selects a better link 2 for transmission.

### Fifth Embodiment

Based on the abovementioned embodiments, in the embodiment of the invention, fast retransmission of the data packet in the case of multiple connections for the terminal is implemented through interaction between a first network element and a second network element. The embodiment of the invention is applied to a retransmission processing in a CU-DU access network architecture where a first network element is a CU and a second network element is a DU, and is not limited to a scenario of the CU-DU architecture.

In the embodiment of the invention, the case of multi-transmission and multi-reception in a multi-connection scenario is described, namely the terminal simultaneously accesses at least two links at present and performs concurrent processing on the at least two links without link switching. The second network element, for example, the DU, triggers the retransmission, and the first network element, for example, the CU, executes the retransmission. In the abovementioned embodiments, complete retransmission is involved, namely the data packet, or called a "large packet", is transmitted. Unlike the abovementioned embodiments, in the embodiment of the invention, partial retransmission is involved, and a fragmented data packet, or called a "small packet", is transmitted, namely only the "small packet" that fails to be transmitted is retransmitted, complete retransmission is not required, processing is required according to a query response fed back by the terminal, and fragmented data packets are required to be re-assembled after successful transmission. Specifically, when the second network element finds that a data packet fails to be transmitted on a first link and/or the first link is abnormal, the second network element triggers the retransmission. The second network element reports a status report. When the status report is analyzed to be that an xth fragmented data packet in the data packet fails to be transmitted on the first link, the first network element initiates a query request to the terminal to confirm a transmission status. The first network element receives the query response fed back by the terminal, analyzes from the query response that the transmission status is that the xth fragmented data packet in the data packet fails to be transmitted on the first link, and selects i links of which link transmission quality is higher than that of the first link from the at least two links, x being a positive integer more than or equal to 1. The first network element forwards an identifier of the first link obtained from the query response to the i links, and retransmits the xth fragmented data packet transmitted on the first link on the i links according to the identifier of the first link, such that the fragmented data packets are re-assembled at the terminal, i being a positive integer more than or equal to 1.

In the embodiment of the invention, the first network element is required to confirm the specific fragmented data packet that fails to be transmitted according to the transmission status fed back by the terminal. During a practical application, considering that the terminal may have received a packet PDCP SN=n2 from the CU but an ACK may fail to be transmitted on a radio link, the CU may initiate a request of querying a PDCP transmission status to the terminal to determine a PDCP data packet that needs to be retransmitted.

### Sixth Embodiment

Based on the abovementioned embodiments, in the embodiment of the invention, fast retransmission of the data packet in the case of multiple connections for the terminal is implemented through interaction between a first network element and a second network element. The embodiment of the invention is applied to a retransmission processing in a CU-DU access network architecture where a first network element is a CU and a second network element is a DU, and is not limited to a scenario of the CU-DU architecture.

In the embodiment of the invention, the case of multi-transmission and multi-reception in a multi-connection scenario is described, namely the terminal simultaneously accesses at least two links at present and performs concurrent processing on the at least two links without link switching. The second network element, for example, the DU, triggers the retransmission, and the first network element, for example, the CU, executes the retransmission.

When the second network element finds that a data packet fails to be transmitted on a first link and/or the first link is abnormal, the second network element triggers the retransmission. The second network element reports a status report. Meanwhile, the terminal also reports a status report. The two status reports may be the same or may be different. The first network element analyzes the two status reports to obtain a practical transmission status (mainly subjected to a transmission status in the status report reported by the terminal) by comparison. When the practical transmission status is that the data packet fails to be transmitted on a first link, the first network element selects i links of which link transmission quality is higher than that of the first link from the at least two links, and retransmits the data packet transmitted on the first link on the i links, i being a positive integer more than or equal to 1. When the practical transmission status is that the data packet fails to be transmitted on the first link and an xth fragmented data packet in the data packet fails to be transmitted on the first link, x being a positive integer more than or equal to 1, the first network element selects the i links of which the link transmission quality is higher than that of the first link from the at least two links, forwards an identifier of the first link obtained from the status report to the i links, and retransmits the xth fragmented data packet transmitted on the first link on the i links according to the identifier of the first link, such that the fragmented data packets are re-assembled at the terminal, i being a positive integer more than or equal to 1.

An example of the invention Based on the abovementioned embodiments, in the invention, fast retransmission of the data packet in the case of multiple connections for the terminal is implemented through interaction between a first network element and a second network element. The invention is applied to a retransmission processing in a CU-DU access network architecture where a first network element is a CU and a second network element is a DU, and is not limited to a scenario of the CU-DU architecture.

In the invention, the case of single-transmission and single-reception in a multi-connection scenario is described, namely the terminal accesses one of at least two links at present and switching among the at least two links is required. The first network element, for example, the CU, triggers the retransmission, and the first network element, for example, the CU, executes the retransmission. The difference from the abovementioned embodiments is that the case of multi-transmission and multi-reception in the multi-connection scenario is described in the abovementioned embodiments. In the present example, two manners are involved. One manner is similar to a complete retransmission strategy in the case of multi-transmission and multi-reception, namely a data packet, or called a "large packet", is transmitted. The other manner is similar to a partial retransmission strategy in the case of multi-transmission and multi-reception, namely a fragmented data packet, or called a "small packet" is transmitted. Only the "small packet" that fails to be transmitted is transmitted and complete retransmission is not required. Furthermore, processing may be performed according to a query response fed back by the terminal, and fragmented data packets are required to be re-assembled after successful transmission. In the invention, for example, for the partial retransmission strategy, the first network element, after an inter-link switching occurs on the at least two links accessed by the terminal, receives a status report reported by the terminal, and the first network element triggers the retransmission. The first network element analyzes that the status report is that a data packet fails to be transmitted on a first link, and initiates a query request to the second network element to confirm a transmission status, namely which fragmented data packet in the data packet fails to be transmitted on the first link. The first network element receives a query response fed back by the second network element and analyzes from the query response that an xth fragmented data packet in the data packet fails to be transmitted on the first link, x being a positive integer more than or equal to 1. The first network element selects i links of which link transmission quality is higher than that of the first link from the at least two links, forwards an identifier of the first link obtained from the query response to the i links, and retransmits the xth fragmented data packet transmitted on the first link on the i links according to the identifier of the first link, such that the fragmented data packets are re-assembled at the terminal, i being a positive integer more than or equal to 1.

An example of the invention Based on the abovementioned embodiments, in the invention, fast retransmission of the data packet in the case of multiple connections for the terminal is implemented through interaction between a first network element and a second network element. The invention is applied to a retransmission processing in a CU-DU access network architecture where a first network element is a CU and a second network element is a DU, and is not limited to a scenario of the CU-DU architecture.

In the invention, the case of single-transmission and single-reception in a multi-connection scenario is described, namely the terminal accesses one of at least two links at present and switching among the at least two links is required. The second network element, for example, the DU, triggers retransmission, and the first network element, for example, the CU, executes the retransmission. The difference from the abovementioned embodiments is that the case of multi-transmission and multi-reception in the multi-connection scenario is described in the abovementioned embodiments. In the present example, two manners are involved. One manner is similar to a complete retransmission strategy in the case of multi-transmission and multi-reception, namely a data packet, or called a "large packet", is transmitted. The other manner is similar to a partial retransmission strategy in the case of multi-transmission and multi-reception, namely a fragmented data packet, or called a "small packet" is transmitted. Only the "small packet" that fails to be transmitted is transmitted and complete retransmission is not required. Furthermore, processing may be performed according to a query response fed back by the terminal, and fragmented data packets are required to be re-assembled after successful transmission. In the invention, for example, for the partial retransmission strategy, when the second network element, after an inter-link switching occurs on the at least two links accessed by the terminal, finds that a data packet fails to be transmitted on a first link and/or the first link is abnormal, the second network element triggers the retransmission. The second network element reports a status report. When the status report is analyzed to be that an xth fragmented data packet in the data packet fails to be transmitted on the first link, the first network element selects i links of which link transmission quality is higher than that of the first link from the at least two links, x being a positive integer more than or equal to 1. The first network element forwards an identifier of the first link obtained from the status report to the i links, and retransmits the xth fragmented data packet transmitted on the first link on the i links according to the identifier of the first link, such that the fragmented data packets are re-assembled at the terminal, i being a positive integer more than or equal to 1.

### Seventh Embodiment

The embodiment of the invention provides a base station, which includes a first network element and a second network element. The first network element is configured to receive a status report reported by the second network element when a terminal accesses at least two links and fails to transmit a data packet on one link and, when the status report is analyzed to be that the data packet fails to be transmitted on a first link, select other links for data retransmission. The second network element is configured to report the status report and interact with the first network element to implement fast retransmission of the data packet in the case of multiple connections for the terminal.

In the embodiment of the invention, when the terminal accesses the at least two links, the first network element allocates multiple data packets obtained by splitting to the at least two links; and then, when the terminal fails to transmit the data packet on one link, the first network element interacts with the second network element to implement retransmission of the data packet in the case of multiple connections for the terminal.

During a practical application, for example, the first network element is a CU on a base station side, and the second network element is a DU on the base station side. A CU-DU architecture is shown in FIG. 2. The CU splits the data packets according to multiple links accessed by the terminal, and in such case, the data packet refers to an IP data packet or a compressed IP data packet. Unlike a subsequent fragmented data packet (or called a sharded data packet), called a "small packet", obtained by fragmentation processing in the DU, the IP data packet or the compressed IP data packet may be called a "large packet". All "small packets" and "large packets" mentioned herein are defined like this, just for simplifying the description. The DU performs fragmentation processing on the data packet to obtain fragmented data packets and then provides them to the corresponding links in the multiple links for transmission. If retransmission is required in such a multi-connection scenario, namely the terminal fails to transmit on one of the multiple links, signaling interaction between the CU and the DU is performed based on the architecture shown in FIG. 2 according to a preset strategy, and fast retransmission of the data packet that fails to be transmitted is implemented on the other link in the multiple links of the terminal, thereby implementing data packet retransmission in the case of multiple connections for the terminal. The embodiment of the invention is applied to a retransmission processing in a CU-DU access network architecture where a first network element is a CU and a second network element is a DU, and is not limited to a scenario of the CU-DU architecture.

As shown in FIG. 2, the CU is a central node capable of controlling and coordinating multiple cells, including protocol stack high-layer control and data functions, and possibly part of baseband processing functions. A unit in the CU is PDCP, and PDCP is configured for processing such as compression, encryption, reassembling and splitting. The DU is a distributed unit that realizes an RRH function and other baseband processing functions. Units in the DU include: 1) RLC, RLC being configured for fragmentation, retransmission and the like; 2) MAC, MAC being configured for scheduling, concatenation, multiplexing, retransmission and the like; and 3) PHY, PHY being configured for modulation, coding and the like. The CU is connected with the DU through a fronthaul interface.

There are multiple segmentation solutions for function division of CU-DU. Different segmentation solutions correspond to different application scenarios and performance gains, and also have greatly different requirements on parameters such as a bandwidth of the fronthaul interface, a transmission delay and synchronization. PDCP-RLC is a high-layer segmentation solution. The PDCP-RLC segmentation solution is most feasible for the CU-DU architecture in a future 3rd Generation Partnership Project (3GPP). Considering that there is only a PDCP stack on the CU and a PDCP layer has no retransmission function, if a terminal fails to transmit on a link when the terminal accesses multiple DUs, fast retransmission is required to be implemented on the other links. With the embodiment of the invention, fast retransmission in a multi-connection scenario is implemented through specific implementation of interaction between CU-DU in each subsequent embodiment.

In an implementation of the embodiment of the invention, the first network element is further configured to: when the first network element receives the status report, trigger a retransmission; and when the status report is analyzed to be that the data packet fails to be transmitted on a first link, select i links of which link transmission quality is higher than that of the first link from the at least two links and retransmit the data packet transmitted on the first link on the i links, i being a positive integer more than or equal to 1. A reporting manner for the status report includes that: 1) the terminal periodically reports the status report; and 2) the terminal reports the status report after receiving a query request from the first network element.

In an implementation of the embodiment of the invention, the first network element is further configured to: when the first network element receives a status report reported by the terminal, trigger a retransmission; and when the status report is analyzed to be that the data packet fails to be transmitted on the first link, select i links of which the link transmission quality is higher than that of the first link from the at least two links and retransmit the data packet transmitted on the first link on the i links, i being a positive integer more than or equal to 1.

In an implementation of the embodiment of the invention, the status report includes: a status report periodically reported by the terminal; or a status report reported by the terminal after receiving a query request from the first network element.

In an implementation of the embodiment of the invention, the second network element is further configured to: when the second network element finds that the data packet fails to be transmitted on the first link and/or the first link is abnormal, trigger the retransmission; and report the status report.

The first network element is further configured to: when the status report is analyzed to be that the data packet fails to be transmitted on the first link, select i links of which the link transmission quality is higher than that of the first link from the at least two links and retransmit the data packet transmitted on the first link on the i links, i being a positive integer more than or equal to 1.

In an implementation of the embodiment of the invention, the second network element is further configured to: when the second network element finds that the data packet fails to be transmitted on the first link and/or the first link is abnormal, trigger the retransmission; and report the status report.

The first network element is further configured to: when the status report is analyzed to be that the data packet fails to be transmitted on the first link and/or the first link is abnormal, initiate a query request to the terminal to confirm a transmission status; and receive a query response fed back by the terminal, analyze that the transmission status is that the data packet fails to be transmitted on the first link, select i links of which the link transmission quality is higher than that of the first link from the at least two links and retransmit the data packet transmitted on the first link on the i links, i being a positive integer more than or equal to 1.

In an implementation of the embodiment of the invention, the first network element is further configured to: when the first network element receives the status report reported by the terminal, trigger the retransmission; when the status report is analyzed to be that the data packet fails to be transmitted on the first link, initiate a query request to the second network element to confirm a transmission status of which fragmented data packet in the data packet fails to be transmitted on the first link; receive a query response fed back by the second network element and analyze that the transmission status is that an xth fragmented data packet in the data packet fails to be transmitted on the first link, x being a positive integer more than or equal to 1; and select i links of which the link transmission quality is higher than that of the first link from the at least two links, forward an identifier of the first link obtained from the query response to the i links and retransmit the xth fragmented data packet transmitted on the first link on the i links according to the identifier of the first link, such that the fragmented data packets are re-assembled at the terminal, i being a positive integer more than or equal to 1.

In an implementation of the embodiment of the invention, the second network element is further configured to: when the second network element finds that the data packet fails to be transmitted on the first link and/or the first link is abnormal, trigger the retransmission; and report the status report.

The first network element is further configured to: when the status report is analyzed to be that the xth fragmented data packet in the data packet fails to be transmitted on the first link, select i links of which the link transmission quality is higher than that of the first link from the at least two links, x being a positive integer more than or equal to 1; and forward the identifier of the first link obtained from the status report to the i links, and retransmit the xth fragmented data packet transmitted on the first link on the i links according to the identifier of the first link, such that the fragmented data packets are re-assembled at the terminal, i being a positive integer more than or equal to 1.

In an implementation of the embodiment of the invention, the second network element is further configured to: when the second network element finds that the data packet fails to be transmitted on the first link and/or the first link is abnormal, trigger the retransmission; and report the status report.

The first network element is further configured to: when the status report is analyzed to be that the xth fragmented data packet in the data packet fails to be transmitted on the first link, initiate a query request to the terminal to confirm a transmission status; receive a query response fed back by the terminal, analyze that the transmission status is that the xth fragmented data packet in the data packet fails to be transmitted on the first link, and select i links of which the link transmission quality is higher than that of the first link from the at least two links, x being a positive integer more than or equal to 1; and forward an identifier of the first link obtained from the query response to the i links and retransmit the xth fragmented data packet transmitted on the first link on the i links according to the identifier of the first link, such that the fragmented data packets are re-assembled at the terminal, i being a positive integer more than or equal to 1.

In an implementation of the embodiment of the invention, the first network element is further configured to: after an inter-link switching occurs on at least two links accessed by the terminal, receive a status report reported by the terminal and trigger a retransmission; analyze that the status report is that a data packet fails to be transmitted on a first link, and initiate a query request to the second network element to confirm a transmission status; receive a query response fed back by the second network element, and analyze that the transmission status is that a xth fragmented data packet in the data packet fails to be transmitted on the first link, x being a positive integer more than or equal to 1; and select i links of which the link transmission quality is higher than that of the first link from the at least two links, forward an identifier of the first link obtained from the query response to the i links and retransmit the xth fragmented data packet transmitted on the first link on the i links according to the identifier of the first link, such that the fragmented data packets are re-assembled at the terminal, i being a positive integer more than or equal to 1.

In an implementation of the embodiment of the invention, the second network element is further configured to: when the second network element, after an inter-link switching occurs on at least two links accessed by the terminal, finds that the data packet fails to be transmitted on the first link and/or the first link is abnormal, trigger the retransmission; and report the status report.

The first network element is further configured to: when the status report is analyzed to be that the xth fragmented data packet in the data packet fails to be transmitted on the first link, select i links of which the link transmission quality is higher than that of the first link from the at least two links, x being a positive integer more than or equal to 1; and forward an identifier of the first link obtained from the status report to the i links and retransmit the xth fragmented data packet transmitted on the first link on the i links according to the identifier of the first link, such that the fragmented data packets are re-assembled at the terminal, i being a positive integer more than or equal to 1.

An example of the invention provides a base station, which includes a processor and a memory configured to store a computer program capable of running in the processor.

The processor is configured to execute the steps of any of the methods in the abovementioned solution when running the computer program.

Specifically, the processor is configured to implement the following operations when running the computer program.

A terminal accesses at least two links.

When the terminal fails to transmit a data packet on one link, a second network element reports a status report.

When the status report is analyzed to be that the data packet fails to be transmitted on a first link, the first network element selects other links for data retransmission.

The processor is further configured to implement the following operation when running the computer program.

After the multiple data packets are fragmented, the second network element provides the multiple fragmented data packets to the terminal for transmission.

The processor is further configured to implement the following operation when running the computer program.

i links of which link transmission quality is higher than that of the first link is selected from the at least two links, and the data packet transmitted on the first link is retransmitted on the i links, i being a positive integer more than or equal to 1.

The processor is further configured to implement the following operation when running the computer program.

When the status report is analyzed to be that an xth fragmented data packet in the data packet fails to be transmitted on the first link, the first network element selects the other link for data retransmission.

The processor is further configured to implement the following operations when running the computer program.

The first network element selects i links of which the link transmission quality is higher than that of the first link from the at least two links, x being a positive integer more than or equal to 1.

The first network element forwards an identifier of the first link obtained from the status report to the i links and retransmits the xth fragmented data packet transmitted on the first link on the i links according to the identifier of the first link, i being a positive integer more than or equal to 1.

An example of the invention provides a storage medium, in which a computer program is stored, the computer program being executed by a processor to implement the steps of any of the methods in the abovementioned solution.

Specifically, the computer program is executed by the processor to implement the following operations.

A terminal accesses at least two links.

When the terminal fails to transmit a data packet on one link, a second network element reports a status report.

When the status report is analyzed to be that the data packet fails to be transmitted on a first link, the first network element selects other links for data retransmission.

The computer program is executed by the processor to further implement the following operation.

After the multiple data packets are fragmented, the second network element provides the multiple fragmented data packets to the terminal for transmission.

The computer program is executed by the processor to further implement the following operation.

i links of which link transmission quality is higher than that of the first link are selected from the at least two links, and the data packet transmitted on the first link is retransmitted on the i links, i being a positive integer more than or equal to 1.

The computer program is executed by the processor to further implement the following operation.

When the status report is analyzed to be that an xth fragmented data packet in the data packet fails to be transmitted on the first link, the first network element selects other links for data retransmission.

The computer program is executed by the processor to further implement the following operations.

The first network element selects i links of which the link transmission quality is higher than that of the first link from the at least two links, i being a positive integer more than or equal to 1.

The first network element forwards an identifier of the first link obtained from the status report to the i links and retransmits the xth fragmented data packet transmitted on the first link on the i links according to the identifier of the first link, i being a positive integer more than or equal to 1.

The embodiments of the invention will be elaborated below with a practical application scenario as an example.

The following specific solutions may be adopted for application scenarios of the embodiments of the invention, and will be elaborated below respectively.

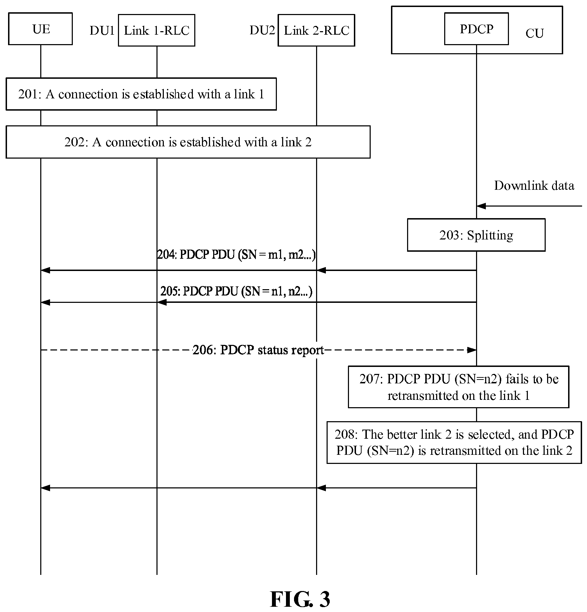

Solution 1: a PDCP layer triggers retransmission of a PDCP packet among different link legs, as shown in FIG. 3.

A flow shown in FIG. 3 includes the following operations.

At 201, a connection is established with a link 1.

At 202, a connection is established with a link 2.

At 203, downlink data is split.

At 204, data packets are transmitted, the data packets being PDCP PDU (SN=m1, m2...).

At 205, data packets are transmitted, the data packets being PDCP PDU (SN=n1, n2...).

At 206, a PDCP status report is reported.

At 207, it is found that transmission on a link fails, for example, the PDCP PDU (SN=n2) fails to be transmitted on the link 1.

At 208, the better link 2 is selected, the PDCP PDU (SN=n2) is retransmitted on the link 2, and subsequent signaling interaction is continued.

The embodiment of the invention may further include the following operation. The PDCP status report is reported based on a network configuration, for example, reported by a terminal responsive to active query from a base station or periodically reported by the terminal.

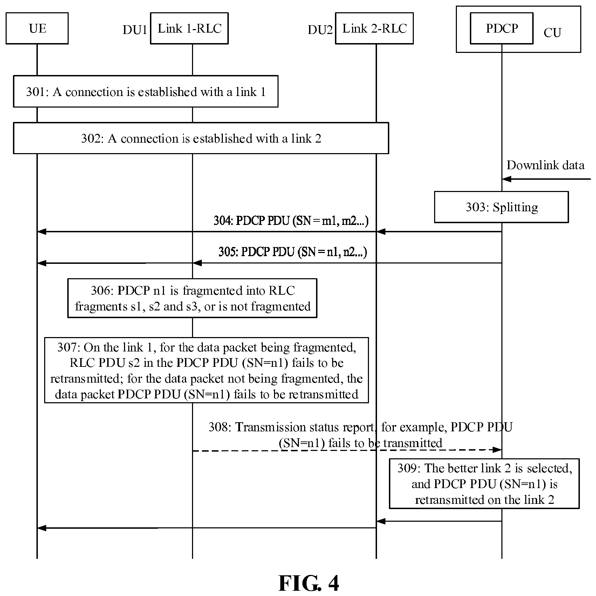

Solution 2: RLC triggers retransmission of a PDCP packet among different legs, as shown in FIG. 4-FIG 5.

A flow shown in FIG. 4 includes the following operations.

At 301, a connection is established with a link 1.

At 302, a connection is established with a link 2.

At 303, downlink data is split.

At 304, data packets are transmitted, the data packets being PDCP PDU (SN=m1, m2...).

At 305, data packets are transmitted, the data packets being PDCP PDU (SN=n1, n2...).

At 306, the PDCP n1 is fragmented into RLC fragments s1, s2 and s3, or is not fragmented.

At 307, transmission on a link fails, for example, if the data packet is fragmented, the RLC PDU s2 in the data packet PDCP PDU (SN=n1) fails to be transmitted on the link 1, or if not being fragmented, the data packet PDCP PDU (SN=n1) fails to be transmitted on the link 1.

At 308, a transmission status report is reported, for example, the PDCP PDU (SN=n1) fails to be transmitted.

At 309, the better link 2 is selected, the PDCP PDU (SN=n1) is retransmitted on the link 2, and subsequent signaling interaction is continued.

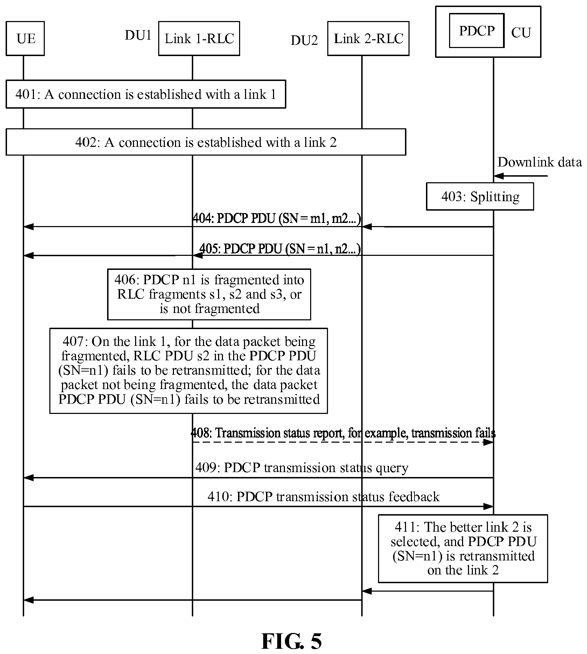

In FIG. 4, since a PDCP status report is not fed back by the terminal and RLC feeds back a status report to a PDCP layer, a delay is shorter. In addition, considering that the terminal may have received the packet PDCP SN=n2 but an ACK may fail to be transmitted on a radio link, a CU may also initiate a request of querying a PDCP transmission status to the terminal to determine the PDCP data packet to be retransmitted, as shown in FIG. 5.

A flow shown in FIG. 5 includes the following operations.

At 401, a connection is established with a link 1.

At 402, a connection is established with a link 2.

At 403, downlink data is split.

At 404, data packets are transmitted, the data packets being PDCP PDU (SN=m1, m2...).

At 405, data packets are transmitted, the data packets being PDCP PDU (SN=n1, n2...).

At 406, the PDCP n1 is fragmented into RLC fragments s1, s2 and s3, or is not fragmented.

At 407, transmission on a link fails, for example, if the data packet is fragmented, the RLC PDU s2 in the data packet PDCP PDU (SN=n1) fails to be transmitted on the link 1, or if not being fragmented, the data packet PDCP PDU (SN=n1) fails to be transmitted on the link 1.

At 408, a transmission status report is reported, for example, transmission fails. At 409, a PDCP transmission status query is initiated.

At 410, a PDCP transmission status is reported.

At 411, the better link 2 is selected, the PDCP PDU (SN=n1) is retransmitted on the link 2, and subsequent signaling interaction is continued.

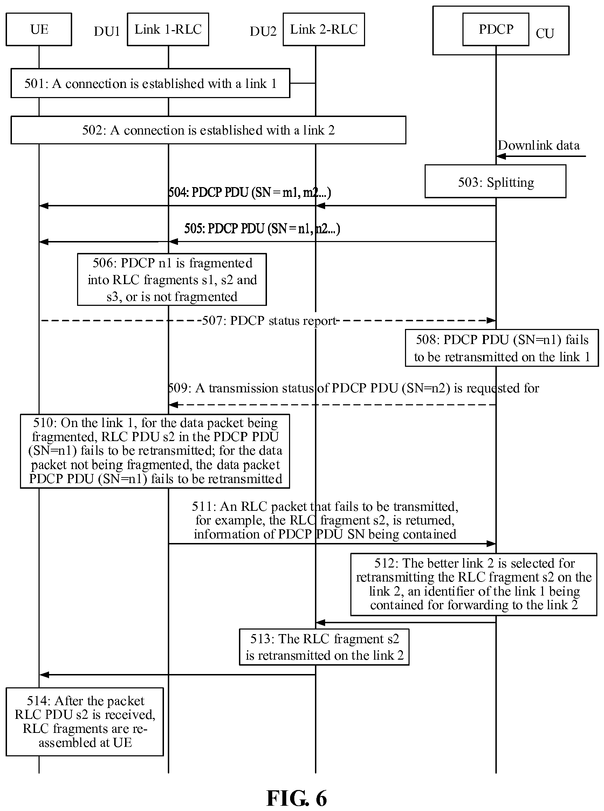

Solution 3: PDCP triggers retransmission of an RLC packet among different legs, as shown in FIG. 6.

A flow shown in FIG. 6 includes the following operations.

At 501, a connection is established with a link 1.

At 502, a connection is established with a link 2.

At 503, downlink data is split.

At 504, data packets are transmitted, the data packets being PDCP PDU (SN=m1, m2...).

At 505, data packets are transmitted, the data packets being PDCP PDU (SN=n1, n2...).

At 506, the PDCP n1 is fragmented into RLC fragments s1, s2 and s3, or is not fragmented.

At 507, a PDCP status report is reported.

At 508, transmission on a link fails, for example, the PDCP PDU (SN=n1) fails to be transmitted on the link 1.

At 509, a transmission status of the PDCP PDU (SN=n2) is requested for.

At 510, it is found that transmission on the link fails, for example, if the data packet is fragmented, the RLC PDU s2 in the data packet PDCP PDU (SN=n1) fails to be transmitted on the link 1, or if not being fragmented, the data packet PDCP PDU (SN=n1) fails to be transmitted on the link 1.

At 511, the RLC packet (for example, RLC fragment s2) that fails to be transmitted is returned, and information of PDCP PDU SN is contained.

At 512, the better link 2 is selected for retransmitting the RLC fragment s2 on the link 2, and an identifier of the link 1 is contained for forwarding to the link 2.

At 513, the RLC fragment s2 is retransmitted on the link 2.

At 514, after the packet RLC PDU s2 is received, RLC fragments are re-assembled at a terminal, and subsequent signaling interaction is continued.

In the embodiment of the invention, a PDCP PDU transmission status report (including an initial status of the RLC PDU that fails to be transmitted) may further be returned through link 1-RLC, and the PDCP, after receiving the transmission report, generates the RLC PDU containing the identifier of the link 1 and selects the better link 2 for transmission.

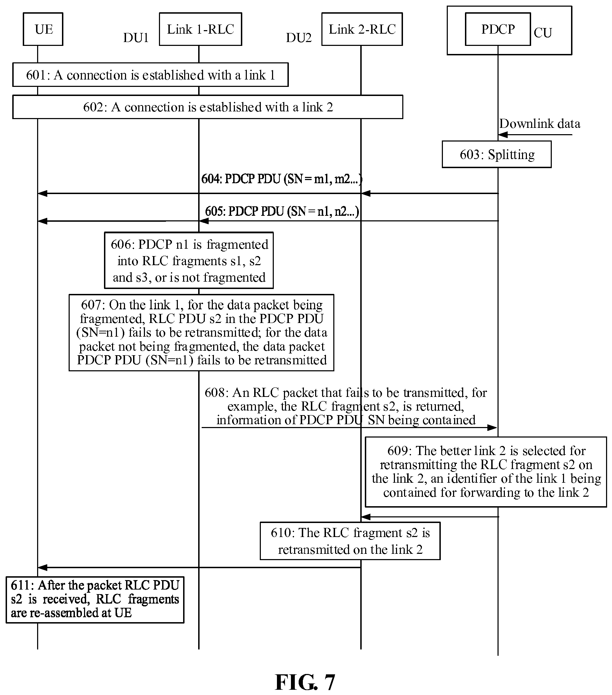

Solution 4: RLC triggers transmission of an RLC packet among different legs, as shown in FIG. 7.

A flow shown in FIG. 7 includes the following operations.

At 601, a connection is established with a link 1.

At 602, a connection is established with a link 2.

At 603, downlink data is split.

At 604, data packets are transmitted, the data packets being PDCP PDU (SN=m1, m2...).

At 605, data packets are transmitted, the data packets being PDCP PDU (SN=n1, n2...).

At 606, the PDCP n1 is fragmented into RLC fragments s1, s2 and s3, or is not fragmented.

At 607, transmission on a link fails, for example, if the data packet is fragmented, the RLC PDU s2 in the data packet PDCP PDU (SN=n1) fails to be transmitted on the link 1, or if not being fragmented, the data packet PDCP PDU (SN=n1) fails to be transmitted on the link 1.

At 608, the RLC packet (for example, RLC fragment s2) that fails to be transmitted is returned, and information of PDCP PDU SN is contained.

At 609, the better link 2 is selected for retransmitting the RLC fragment s2 on the link 2, and an identifier of the link 1 is contained for forwarding to the link 2.

At 610, the RLC fragment s2 is retransmitted on the link 2.

At 611, after the packet RLC PDU s2 is received, RLC fragments are re-assembled at a terminal, and subsequent signaling interaction is continued.

In the embodiment of the invention, a PDCP PDU transmission status report (including an initial status of the RLC PDU that fails to be transmitted) may be returned through link 1-RLC, and the PDCP, after receiving the transmission report, generates the RLC PDU containing the identifier of the link 1 and selects the better link 2 for transmission.

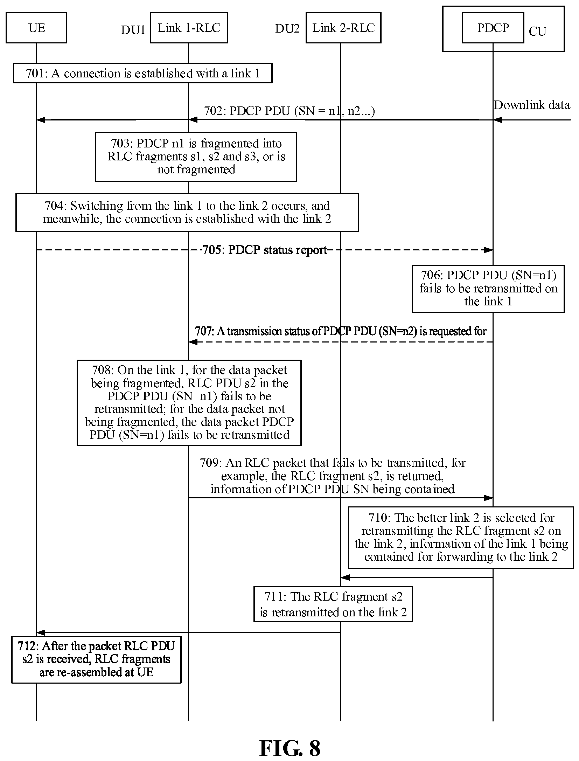

Solution 5: an RLC fragment packet may be retransmitted for a DU switching scenario, as shown in FIG. 8-FIG 9. Unlike the abovementioned "dual-transmission and dual-reception scenario" in the multi-connection, Solution 5 involves a "single-transmission and single-reception scenario" in the multi-connection.

FIG. 8 shows a flow of a retransmission triggered by PDCP, including the following operations.

At 701, a connection is established with a link 1.

At 702, downlink data packets PDCP PDU (SN=n1, n2...) are transmitted.

At 703, the PDCP n1 is fragmented into RLC fragments s1, s2 and s3, or is not fragmented.

At 704, switching from the link 1 to a link 2 occurs, and meanwhile, a connection is established with the link 2.

At 705, a PDCP status report is reported.

At 706, transmission on a link fails, for example, the PDCP PDU (SN=n1) fails to be transmitted on the link 1.

At 707, a transmission status of the PDCP PDU (SN=n2) is requested for.

At 708, transmission on the link fails, for example, if the data packet is fragmented, the RLC PDU s2 in the data packet PDCP PDU (SN=n1) fails to be transmitted on the link 1, or if not being fragmented, the data packet PDCP PDU (SN=n1) fails to be transmitted on the link 1.

At 709, the RLC packet (for example, RLC fragment s2) that fails to be transmitted is returned, and information of PDCP PDU SN is contained.

At 710, the better link 2 is selected for retransmitting the RLC fragment s2 on the link 2, and information of the link 1 is contained for forwarding to the link 2.

At 711, the RLC fragment s2 is retransmitted on the link 2.

At 712, after the packet RLC PDU s2 is received, RLC fragments are re-assembled at a terminal, and subsequent signaling interaction is continued.

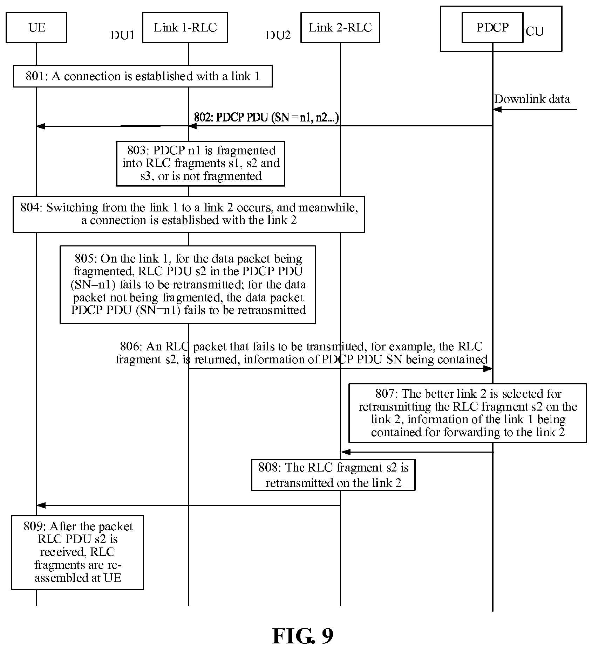

FIG. 9 shows a flow of a retransmission triggered by RLC, including the following operations.

At 801, a connection is established with a link 1.

At 802, data packets PDCP PDU (SN=n1, n2...) are transmitted.

At 803, the PDCP n1 is fragmented into RLC fragments s1, s2 and s3, or is not fragmented.

At 804, switching from the link 1 to a link 2 occurs, and meanwhile, a connection is established with the link 2.

At 805, transmission on a link fails, for example, if the data packet is fragmented, the RLC PDU s2 in the data packet PDCP PDU (SN=n1) fails to be transmitted on the link 1, or if not being fragmented, the data packet PDCP PDU (SN=n1) fails to be transmitted on the link 1.

At 806, the RLC packet (for example, RLC fragment s2) that fails to be transmitted is returned, and information of PDCP PDU SN is contained.

At 807, the better link 2 is selected for retransmitting the RLC fragment s2 on the link 2, and information of the link 1 is contained for forwarding to the link 2.

At 808, the RLC fragment s2 is retransmitted on the link 2.

At 809, after the packet RLC PDU s2 is received, RLC fragments are re-assembled at a terminal, and subsequent signaling interaction is continued.

With the foregoing solutions 1-5, fast retransmission of a PDCP or RLC packet in the case of multiple links may be implemented through interaction between a CU and a DU. Fast retransmission among the multiple links may be implemented, and retransmission of an RLC PDU on different links may also be implemented to avoid retransmission of the whole PDCP PDU.

When being implemented in form of software functional module and sold or used as an independent product, the integrated module of the embodiments of the application may also be stored in a computer-readable storage medium. Based on such an understanding, the technical solutions of the embodiments of the invention substantially or parts making contributions to the conventional art may be embodied in form of software product, and the computer software product is stored in a storage medium, including a plurality of instructions configured to enable a computer device (which may be a personal computer, a server, a network device or the like) to execute all or part of the method in each embodiment of the invention. The storage medium includes various media capable of storing program codes such as a U disk, a mobile hard disk, a Read-Only Memory (ROM), a Random Access Memory (RAM), a magnetic disk or an optical disk. Therefore, the embodiments of the invention are not limited to any particular combination of hardware and software.

Correspondingly, an embodiment of the invention also provides a computer storage medium, in which a computer program is stored, the computer program being configured to execute a method for implementing multilink retransmission in the case of multiple connections according to the embodiments of the invention.

The above description is only for the preferred embodiments of the invention and not intended to limit the scope of protection of the invention, which is limited only by the appended claims.

### INDUSTRIAL APPLICABILITY

With the embodiments of the invention, the terminal accesses the at least two links; when the terminal fails to transmit the data packet on one link, the second network element reports the status report; and when the status report is analyzed to be that the data packet fails to be transmitted on the first link, the first network element selects the other link for data retransmission. When the terminal fails to transmit a data packet on one link in multiple links, the data packet that fails to be transmitted may be quickly retransmitted on the other link, so that retransmission of the data packet in the case of multiple connections for the terminal is implemented. The method is applied to retransmission processing in a CU-DU architecture of the access network where a first network element is a CU and a second network element is a DU, and is not limited to a scenario of the CU-DU architecture.

## Claims

1. A method for implementing multilink retransmission in the case of multiple connections, comprising:
accessing (101), by a terminal, at least two links simultaneously, wherein the at least two links are links respectively established by the terminal with at least two second network elements;
when a second network element of the at least two second network elements finds at least one of the following situations: a data packet fails to be transmitted from the second network element to the terminal on a first link or the first link is abnormal, reporting (102), by the second network element, a status report to a first network element, the first network element being different from the at least two second network elements; and
when the status report is analyzed to be that the data packet fails to be transmitted on the first link, selecting (103), by the first network element, other links for retransmission of data to the terminal.

2. The method of claim 1, further comprising:
allocating, by the first network element, a plurality of data packets obtained by splitting to the at least two links.

3. The method of claim 2, further comprising:
performing, by the second network element, fragmentation processing on the plurality of data packets to obtain a plurality of fragmented data packets, providing, by the second network element, the plurality of fragmented data packets to the at least two links for transmission.

4. The method of any one of claims 1-3, wherein when the status report is analyzed to be that the data packet fails to be transmitted on the first link, selecting, by the first network element, the other links for data retransmission comprises:
selecting, from the at least two links, i links of which link transmission quality is higher than that of the first link, and retransmitting the data packet transmitted on the first link on the i links, i being a positive integer more than or equal to 1.

5. The method of any one of claims 1-3, wherein when the status report is analyzed to be that the data packet fails to be transmitted on the first link, selecting, by the first network element, the other links for data retransmission comprises:
when the status report is analyzed to be that an xth fragmented data packet in the data packet fails to be transmitted on the first link, selecting, by the first network element, the other links for data retransmission, x being a positive integer more than or equal to 1.

6. The method of claim 5, further comprising:
selecting, by the first network element, i links of which link transmission quality is higher than that of the first link from the at least two links, i being a positive integer more than or equal to 1; and
forwarding, by the first network element, an identifier of the first link obtained from the status report to the i links, and retransmitting the xth fragmented data packet transmitted on the first link on the i links according to the identifier of the first link.

7. A base station, comprising a first network element and at least two second network elements, wherein
the first network element is configured to: receive, in the case that a terminal accesses at least two links simultaneously, a status report reported by a second network element of the at least two second network elements when the second network element finds at least one of the following situations: a data packet fails to be transmitted from the second network element to the terminal on a first link or the first link is abnormal, and when the status report is analyzed to be that the data packet fails to be transmitted to the terminal on the first link, select other links for retransmission of data to the terminal, wherein the at least two links are links respectively established by the terminal with the at least two second network elements; and
the second network element is configured to report the status report to the first network element.

8. The base station of claim 7, wherein the first network element is further configured to allocate a plurality of data packets obtained by splitting to the at least two links.

9. The base station of claim 8, wherein the second network element is further configured to perform fragmentation processing on the plurality of data packets to obtain a plurality of fragmented data packets, and provide the plurality of fragmented data packets to the at least two links for transmission.

10. The base station of any one of claims 7-9, wherein the first network element is further configured to:
select, from the at least two links, i links of which link transmission quality is higher than that of the first link, and retransmit the data packet transmitted on the first link on the i links, i being a positive integer more than or equal to 1.

11. The base station of any one of claims 7-9, wherein the first network element is further configured to:
when the status report is analyzed to be that an xth fragmented data packet in the data packet fails to be transmitted on the first link, select the other links for data retransmission, x being a positive integer more than or equal to 1.

12. The base station of claim 11, wherein the first network element is further configured to:
select, from the at least two links, i links of which link transmission quality is higher than that of the first link, i being a positive integer more than or equal to 1; and
forward an identifier of the first link obtained from the status report to the i links, and retransmit the xth fragmented data packet transmitted on the first link on the i links according to the identifier of the first link.

13. A base station, comprising a processor and a memory configured to store a computer program capable of running in the processor,
wherein the processor is configured to run the computer program to execute the method of any one of claims 1-6.

14. A storage medium having stored therein a computer program, wherein when the computer program is executed by a processor, the processor is caused to implement the method of any one of claims 1-6.

## Patentansprüche

1. Verfahren zum Implementieren einer erneuten Mehrfachverbindung-Übertragung im Fall von vielfachen Verbindungen, umfassend:
Zugreifen (101), durch ein Endgerät, auf mindestens zwei Verbindungen gleichzeitig, wobei die mindestens zwei Verbindungen Verbindungen sind, die jeweils durch das Endgerät mit mindestens zwei zweiten Netzelementen hergestellt werden;
wenn ein zweites Netzelement der mindestens zwei zweiten Netzelemente mindestens eine der folgenden Situationen feststellt: ein Übertragen eines Datenpakets von dem zweiten Netzelement an das Endgerät auf einer ersten Verbindung schlägt fehl, oder die erste Verbindung ist anormal, Melden (102), durch das zweite Netzelement, eines Statusberichts an ein erstes Netzelement, wobei sich das erste Netzelement von den mindestens zwei zweiten Netzelementen unterscheidet; und
wenn der Statusbericht dahingehend analysiert wird, dass ein Übertragen des Datenpakets auf der ersten Verbindung fehlschlägt, Auswählen (103), durch das erste Netzelement, anderer Verbindungen zur erneuten Übertragung von Daten an das Endgerät.

2. Verfahren nach Anspruch 1, ferner umfassend:
Zuweisen, durch das erste Netzelement, einer Vielzahl von Datenpaketen, die durch Aufteilen erlangt werden, zu den mindestens zwei Verbindungen.

3. Verfahren nach Anspruch 2, ferner umfassend:
Ausführen, durch das zweite Netzelement, einer Fragmentierungsverarbeitung über die Vielzahl von Datenpaketen, um eine Vielzahl von fragmentierten Datenpaketen zu erlangen, Bereitstellen, durch das zweite Netzelement, der Vielzahl von fragmentierten Datenpaketen an die mindestens zwei Verbindungen zur Übertragung.

4. Verfahren nach einem der Ansprüche 1-3, wobei, wenn der dahingehend analysiert wird, dass ein Übertragen des Datenpakets auf der ersten Verbindung fehlschlägt, ein Auswählen, durch das erste Netzelement, der anderen Verbindungen zur erneuten Datenübertragung Folgendes umfasst:
Auswählen, aus den mindestens zwei Verbindungen, von i Verbindungen, deren Verbindungsübertragungsqualität höher ist als die der ersten Verbindung, und erneutes Übertragen des Datenpakets, das auf der ersten Verbindung auf den i Verbindungen übertragen wird, wobei i eine positive ganze Zahl größer als oder gleich wie 1 ist.

5. Verfahren nach einem der Ansprüche 1-3, wobei, wenn der dahingehend analysiert wird, dass ein Übertragen des Datenpakets auf der ersten Verbindung fehlschlägt, ein Auswählen, durch das erste Netzelement, der anderen Verbindungen zur erneuten Datenübertragung Folgendes umfasst:
wenn der Statusbericht dahingehend analysiert wird, dass ein Übertragen eines x-ten fragmentierten Datenpakets in dem Datenpaket auf der ersten Verbindung fehlschlägt, Auswählen, durch das erste Netzelement, der anderen Verbindungen zur erneuten Datenübertragung, wobei x eine positive ganze Zahl größer als oder gleich wie 1 ist.

6. Verfahren nach Anspruch 5, ferner umfassend:
Auswählen, durch das erste Netzelement, von i Verbindungen, deren Verbindungsübertragungsqualität höher ist als die der ersten Verbindung, aus den mindestens zwei Verbindungen , wobei i eine positive ganze Zahl größer als oder gleich wie 1 ist; und
Weiterleiten, durch das erste Netzelement, einer Kennung der ersten Verbindung, die aus dem Statusbericht erlangt wird, an die i Verbindungen, und erneutes Übertragen des x-ten fragmentierten Datenpakets, das auf der ersten Verbindung übertragen wird, auf den i Verbindungen entsprechend der Kennung der ersten Verbindung.

7. Basisstation, umfassend ein erstes Netzelement und mindestens zwei zweite Netzelemente, wobei das erste Netzelement zu Folgendem konfiguriert ist:
Empfangen, in dem Fall, dass ein Endgerät gleichzeitig auf mindestens zwei Verbindungen zugreift, eines Statusberichts, der von einem zweiten Netzelement der mindestens zwei zweiten Netzelemente gemeldet wird, wenn das zweite Netzelement mindestens eine der folgenden Situationen feststellt: ein Übertragen eines Datenpakets von dem zweiten Netzelement an das Endgerät auf einer ersten Verbindung schlägt fehl, oder die erste Verbindung ist anormal, und wenn der Statusbericht dahingehend analysiert wird, dass ein Übertragen des Datenpakets über die erste Verbindung an das Endgerät fehlschlägt, Auswählen anderer Verbindungen zur erneuten Übertragung von Daten an das Endgerät, wobei die mindestens zwei Verbindungen Verbindungen sind, die jeweils von dem Endgerät mit den mindestens zwei zweiten Netzelementen hergestellt werden; und
das zweite Netzelement konfiguriert ist, um den Statusbericht an das erste Netzelement zu melden.

8. Basisstation nach Anspruch 7, wobei das erste Netzelement ferner konfiguriert ist, um eine Vielzahl von Datenpaketen, die durch Aufteilen erhalten wurden, den mindestens zwei Verbindungen zuzuweisen.

9. Basisstation nach Anspruch 8, wobei das zweite Netzelement ferner konfiguriert ist, um eine Fragmentierungsverarbeitung an der Vielzahl von Datenpaketen auszuführen, um eine Vielzahl von fragmentierten Datenpaketen zu erlangen, und die Vielzahl von fragmentierten Datenpaketen den mindestens zwei Verbindungen zur Übertragung bereitzustellen.

10. Basisstation nach einem der Ansprüche 7-9, wobei das erste Netzelement ferner zu Folgendem konfiguriert ist:
Auswählen, aus den mindestens zwei Verbindungen, von i Verbindungen, deren Verbindungsübertragungsqualität höher ist als die der ersten Verbindung, und erneutes Übertragen des Datenpakets, das auf der ersten Verbindung auf den i Verbindungen übertragen wird, wobei i eine positive ganze Zahl größer als oder gleich wie 1 ist.

11. Basisstation nach einem der Ansprüche 7-9, wobei das erste Netzelement ferner zu Folgendem konfiguriert ist:
wenn der Statusbericht dahingehend analysiert wird, dass ein Übertragen eines x-ten fragmentierten Datenpakets in dem Datenpaket auf der ersten Verbindung fehlschlägt, Auswählen der anderen Verbindungen zur erneuten Datenübertragung, wobei x eine positive ganze Zahl größer als oder gleich wie 1 ist.

12. Basisstation nach Anspruch 11, wobei das erste Netzelement ferner zu Folgendem konfiguriert ist:
Auswählen, aus den mindestens zwei Verbindungen, von i Verbindungen, deren Verbindungsübertragungsqualität höher ist als die der ersten Verbindung, wobei i eine positive ganze Zahl größer als oder gleich 1 wie ist; und
Weiterleiten einer Kennung der ersten Verbindung, die aus dem Statusbericht erlangt wird, an die i Verbindungen, und erneutes Übertragen des x-ten fragmentierten Datenpakets, das auf der ersten Verbindung übertragen wird, auf den i Verbindungen entsprechend der Kennung der ersten Verbindung.

13. Basisstation, umfassend einen Prozessor und einen Speicher, der konfiguriert ist, um ein Computerprogramm zu speichern, das in der Lage ist, in dem Prozessor zu laufen,
wobei der Prozessor konfiguriert ist, um das Computerprogramm laufen zu lassen, um das Verfahren nach einem der Ansprüche 1-6 auszuführen.

14. Speichermedium, in dem ein Computerprogramm gespeichert ist, wobei, wenn das Computerprogramm von einem Prozessor ausgeführt wird, der Prozessor veranlasst wird, das Verfahren nach einem der Ansprüche 1-6 zu implementieren.

## Revendications

1. Procédé de mise en œuvre de la retransmission multiliaison dans le cas de connexions multiples, comprenant :
l'accès (101), par un terminal, à au moins deux liaisons simultanément, dans lequel les au moins deux liaisons sont des liaisons établies respectivement par le terminal avec au moins deux seconds éléments de réseau ;
lorsqu'un second élément de réseau des au moins deux seconds éléments de réseau trouve au moins l'une des situations suivantes : un paquet de données ne parvient pas à être transmis à partir du second élément de réseau au terminal sur une première liaison ou la première liaison est anormale, le rapport (102), par le second élément de réseau, d'un rapport d'état à un premier élément de réseau, le premier élément de réseau étant différent des au moins deux seconds éléments de réseau ; et
lorsque le rapport d'état est analysé pour indiquer que le paquet de données ne parvient pas à être transmis sur la première liaison, la sélection (103), par le premier élément de réseau, d'autres liaisons pour la retransmission de données vers le terminal.

2. Procédé selon la revendication 1, comprenant en outre :
l'allocation, par le premier élément de réseau, d'une pluralité de paquets de données obtenus par fractionnement aux au moins deux liaisons.

3. Procédé selon la revendication 2, comprenant en outre :
l'exécution, par le second élément de réseau, d'un traitement de fragmentation sur la pluralité de paquets de données pour obtenir une pluralité de paquets de données fragmentés, fournissant, par le second élément de réseau, la pluralité de paquets de données fragmentés aux au moins deux liaisons pour la transmission.

4. Procédé selon l'une quelconque des revendications 1 à 3, dans lequel lorsque le rapport d'état est analysé comme étant que le paquet de données ne parvient pas à être transmis sur la première liaison, la sélection, par le premier élément de réseau, des autres liaisons pour la retransmission de données comprend :
la sélection, parmi les au moins deux liaisons, de i liaisons dont la qualité de transmission de liaison est supérieure à celle de la première liaison, et la retransmission du paquet de données transmis sur la première liaison sur les i liaisons, i étant un entier positif supérieur ou égal à 1.

5. Procédé selon l'une quelconque des revendications 1 à 3, dans lequel, lorsque le rapport d'état est analysé comme étant que le paquet de données ne parvient pas à être transmis sur la première liaison, la sélection, par le premier élément de réseau, des autres liaisons pour la retransmission de données comprend :
lorsque le rapport d'état est analysé comme étant qu'un xème paquet de données fragmenté dans le paquet de données ne parvient pas à être transmis sur la première liaison, la sélection, par le premier élément de réseau, des autres liaisons pour la retransmission de données, x étant un entier positif supérieur ou égal à 1.

6. Procédé selon la revendication 5, comprenant en outre :
la sélection, par le premier élément de réseau, de i liaisons dont la qualité de transmission de liaison est supérieure à celle de la première liaison parmi les au moins deux liaisons, i étant un entier positif supérieur ou égal à 1 ; et
le transfert, par le premier élément de réseau, d'un identifiant de la première liaison obtenu à partir du rapport d'état aux i liaisons, et la retransmission du xème paquet de données fragmentées transmis sur la première liaison sur les i liaisons en fonction de l'identifiant de la première liaison.

7. Station de base, comprenant un premier élément de réseau et au moins deux seconds éléments de réseau, dans laquelle
le premier élément de réseau est configuré pour : recevoir, dans le cas où un terminal accède à au moins deux liaisons simultanément, un rapport d'état rapporté par un second élément de réseau des au moins deux seconds éléments de réseau lorsque le second élément de réseau trouve au moins l'une des situations suivantes : un paquet de données ne parvient pas à être transmis à partir du second élément de réseau au terminal sur une première liaison ou la première liaison est anormale, et lorsque le rapport d'état est analysé pour indiquer que le paquet de données ne parvient pas à être transmis au terminal sur la première liaison, sélectionner d'autres liaisons pour la retransmission des données vers le terminal, dans laquelle les au moins deux liaisons sont des liaisons respectivement établies par le terminal avec les au moins deux seconds éléments de réseau ; et
le second élément de réseau est configuré pour rapporter le rapport d'état au premier élément de réseau.

8. Station de base selon la revendication 7, dans laquelle le premier élément de réseau est en outre configuré pour allouer une pluralité de paquets de données obtenus par fractionnement aux au moins deux liaisons.

9. Station de base selon la revendication 8, dans laquelle le second élément de réseau est en outre configuré pour effectuer un traitement de fragmentation sur la pluralité de paquets de données pour obtenir une pluralité de paquets de données fragmentés, et fournir la pluralité de paquets de données fragmentés aux au moins deux liaisons pour la transmission.

10. Station de base selon l'une quelconque des revendications 7 à 9, dans laquelle le premier élément de réseau est en outre configuré pour :
sélectionner, parmi les au moins deux liaisons, i liaisons dont la qualité de transmission de liaison est supérieure à celle de la première liaison, et retransmettre le paquet de données transmis sur la première liaison sur les i liaisons, i étant un entier positif supérieur ou égal à 1.

11. Station de base selon l'une quelconque des revendications 7 à 9, dans laquelle le premier élément de réseau est en outre configuré pour :
lorsque le rapport d'état est analysé comme étant qu'un xème paquet de données fragmenté dans le paquet de données ne parvient pas à être transmis sur la première liaison, sélectionner les autres liaisons pour la retransmission des données, x étant un entier positif supérieur ou égal à 1.

12. Station de base selon la revendication 11, dans laquelle le premier élément de réseau est en outre configuré pour :
sélectionner, parmi les au moins deux liaisons, i liaisons dont la qualité de transmission de liaison est supérieure à celle de la première liaison, i étant un entier positif supérieur ou égal à 1 ; et
transférer un identifiant de la première liaison obtenu à partir du rapport d'état aux i liaisons, et retransmettre le xème paquet de données fragmentées transmis sur la première liaison sur les i liaisons en fonction de l'identifiant de la première liaison.

13. Station de base, comprenant un processeur et une mémoire configurée pour stocker un programme informatique capable de fonctionner dans le processeur,
dans laquelle le processeur est configuré pour exécuter le programme informatique pour exécuter le procédé de l'une quelconque des revendications 1 à 6.

14. Support de stockage dans lequel est stocké un programme informatique, dans lequel, lorsque le programme informatique est exécuté par un processeur, le processeur est amené à mettre en œuvre le procédé de l'une quelconque des revendications 1 à 6.
